# EUROPEAN PATENT SPECIFICATION

(11) **EP 1 697 201 B1**
(45) Date of publication and mention of the grant of the patent: **06.05.2009**
(21) Application number: 04801699.2
(22) Date of filing: 01.12.2004
(51) Int. Cl.: B62D 5/04, B62D 5/06, B62D 5/30

(54) **METHOD AND COMPUTER PRODUCT IN A STEERING ARRANGEMENT FOR A VEHICLE**
VERFAHREN UND RECHNERPRODUKT IN EINER LENKANORDNUNG FÜR EIN FAHRZEUG
PROCEDE ET PRODUIT INFORMATIQUE DANS UN DISPOSITIF DE CONDUITE DE VEHICULE

(30) Priority: 17.12.2003 SE 0303449
(43) Date of publication of application: 06.09.2006
(73) Proprietor: Volvo Bussar AB, 40508 Göteborg (SE)
(72) Inventor: NYBERG, Olle, S-429 31 Kullavik (SE)
(74) Representative: Fröhling, Werner Otto
(86) International application number: PCT/SE2004/001776
(87) International publication number: WO 2005/058670

(56) References cited:
- US-A- 4 956 590
- US-A- 6 041 884
- US-A1- 2001 027 895

## Description

### Technical field

The present invention relates to a vehicle steering gear ratio control method for a steering arrangement, comprising a steering element connected to at least one wheel of the vehicle, with the steering angle of the said wheel of the vehicle being controlled in response to a movement of the steering element according to the preamble of claim 1. The invention also relates to a computer program and a computer program product of a vehicle steering gear ratio control method according to the preamble of claims 11 to 13.

### Background art

Steering arrangements in heavy vehicles, such as buses and lorries, are normally provided with servo steering in order to make steering of the wheels easier. Said servo steering comprises for this purpose a hydraulic pump, that is driven by the vehicle's propulsion motor, that pumps hydraulic oil that urges the steering in the direction in which the driver of the vehicle turns the vehicle's steering wheel. The ratio between the number of revolutions that the driver must turn the steering wheel e.g. between full steering lock positions from right to left is called the "gear ratio" - a high gear ratio thus means that relatively many revolutions of the steering wheel are required between the full lock positions. In a vehicle with servo steering, a relatively low gear ratio is normally selected as this means that the steering is more direct and it is more comfortable as the steering wheel needs to be turned less, for example when parking. Against the background of the above, it will be recognized that if the function of the servo steering is reduced or lost completely for some reason, for example in the event of a breakdown of the hydraulic pump or an engine stoppage, the resistance to turning of the steering wheel will be very high, which makes continued driving of the vehicle difficult. In order to solve this, a steering wheel is normally used with a relatively large diameter which is easier to turn than a steering wheel with a small diameter in the event of the function of the servo steering being reduced or lost. This results, however, in the disadvantage that the steering feels less direct and that the steering wheel takes up a relatively large amount of the limited space that constitutes the space for the driver.

Other types of servo steering are variants of so-called electrical servo steering, that is where the power from an electric motor is transferred to the steering arrangement in order to make steering of the wheels of the vehicle easier and in this way, as described above, to enable a relatively low gear ratio to be selected in combination with a steering wheel with a relatively small diameter. This results in the same problem as that which can arise with the hydraulic servo steering described above, that is to say if the function of the servo steering is reduced or lost completely for some reason, for example in the event of a fault in the electric motor, the resistance to turning of the steering wheel becomes very high, which makes continued driving of the vehicle difficult.

Variable gear ratio steering arrangements are e.g. known from US 5 205 371A, US 2001 0027895A1, US 6041884A or US 4956590A.

### Disclosure of invention

A first object of the invention is to achieve a vehicle steering gear ratio control method that enables a steering wheel with a relatively small diameter to be used in combination with a relatively low gear ratio, even on heavy vehicles such as buses and lorries, without the resistance to turning of the steering wheel being too high, and thereby making continued driving of the vehicle difficult, if the function of the servo steering is reduced or lost completely for some reason.

This object is achieved by the invention described in claim 1. Preferred embodiments of the invention are described in the dependent claims.

Thus the invention relates to a vehicle steering gear ratio control method , comprising a steering element connected to at least one wheel of the vehicle, with the steering angle of the said wheel of the vehicle being controlled in response to a movement of the steering element, with the function of a servo device connected to the steering arrangement being detected and with the gear ratio between the said movement of the steering element and the steering angle of the wheel of the vehicle being controlled in response to the function of the said servo device.

By function is meant here to what extent the servo device makes easier or reduces the force or turning moment that is required in order to achieve a certain movement of the steering element that is required in order to achieve a certain steering angle.

An additional object of the invention is to compensate for the force that must be applied to the steering element in order to achieve a required steering angle upon the detection of reduced function of the servo device, by the gear ratio being increased by a factor corresponding to the said reduction in function of the servo device, so that the said force is less than a predetermined maximum level. By this means, it is possible to continue to drive the vehicle to its final destination, after which the vehicle is to be taken into the workshop for faultfinding, repairs and resetting of the gear ratio to a normal position.

According to an embodiment of the present invention, the gear ratio is increased by a predetermined factor from a normal ratio to a higher ratio that corresponds to the servo device being completely out of action.

Accordingly, a simple device is required for controlling the said gear ratio.

According to an alternative embodiment of the present invention, the gear ratio is increased in steps, from a normal ratio to a higher ratio corresponding to the detected reduction in function of the servo device. The said stepwise increase is preferably carried out in three or more steps. By this means, it is possible to make a good match of the gear ratio and it is thereby possible to compensate for the force that must be applied to the steering element in order to achieve a required steering angle of the wheels of the vehicle.

According to a further embodiment of the present invention, the gear ratio is varied steplessly, from the said normal ratio to a maximally increased ratio. By this means, it is possible to compensate precisely for the force that must be applied to the steering element in order to achieve a required steering angle of the wheels of the vehicle in relation to the function of the servo device detected at each given moment.

According to an embodiment, the gear ratio is increased from the said normal ratio to a maximally increased ratio that corresponds to the function of the servo device being lost completely, by a factor in the range 1.25 to 2.25.

According to an embodiment of the present invention, the function of the servo device is detected by a pressure sensor that detects the hydraulic pressure at the outlet of the hydraulic pump. Additional or alternative pressure sensors can also be arranged in other places in the hydraulic system in order, in this way, to provide a good indication of the function of the servo device.

According to an alternative embodiment of the present invention, the function of an electrical servo device, comprising an electric motor, is detected by the speed and/or the power consumption of the motor being used as an indicator of the function of the servo device.

Additional advantages and objects of the invention can be understood from the following patent claims and the following description.

### Brief description of drawings

In the following, the invention will be described with reference to preferred embodiments and the attached drawings, in which
Figure 1 shows a schematic perspective view of a steering arrangement for a vehicle according to the present invention,
Figure 2 shows a flow chart that describes the method for a vehicle with a steering arrangement according to the present invention, and
Figure 3 shows the steering angle as a function of the number of rotations of the steering wheel, with the servo device working and a normal gear ratio, and with the servo device not working and thus with a high gear ratio, according to the present invention.

### Modes for carrying out the invention

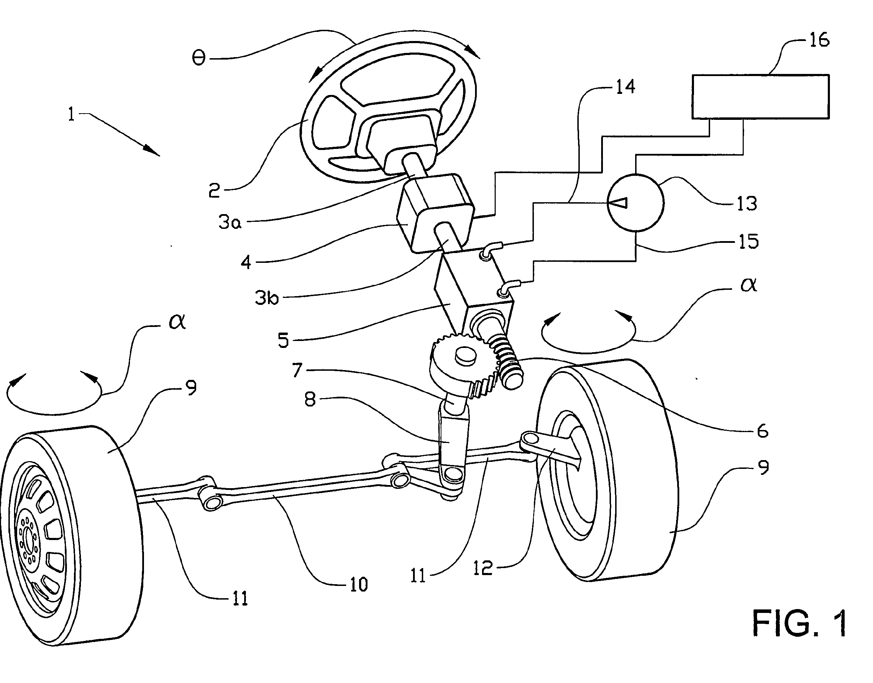

Figure 1 shows a schematic view of an example of a steering arrangement 1 for a heavy vehicle, for example in the form of a bus or a lorry. The steering arrangement 1 comprises a steering wheel 2 which is connected, via an upper steering column 3a, to a variable transmission 4 which, in turn, is connected, via a lower steering column 3b, to a steering gear 5 of the worm gear type where the lower part 6 of the steering column 3b is designed as a worm that is in engagement with a corresponding worm wheel on a steering shaft 7. An arm 8 is arranged on the steering shaft 7, which arm is, in turn, connected to a rod 10 arranged between the wheels 9 of the vehicle, which rod 10 transfers movements of the steering wheel θ to movements of the wheels α via a drag link 11 and steering arms 12. In addition, a servo device 13 driven by the vehicle's propulsion motor (not shown), in the form of a hydraulic pump, is connected to the steering gear 5 via hydraulic pipes 14, 15. Control of the gear ratio in the variable transmission 4 is carried out by a central electronic control unit 16, hereafter called an ECU, which sends a signal to the said transmission 4 in response to the function of the said servo device 13, with the function, for example, being indicated by a pressure sensor for detecting the hydraulic pressure at the outlet of the hydraulic pump. Additional or alternative pressure sensors can also be arranged in other places in the hydraulic system in order, in this way, to give a good indication of the function of the servo device. In addition, in an electrical servo device, the speed and/or the power consumption of the electric motor can be used as an indicator of the function of the servo device.

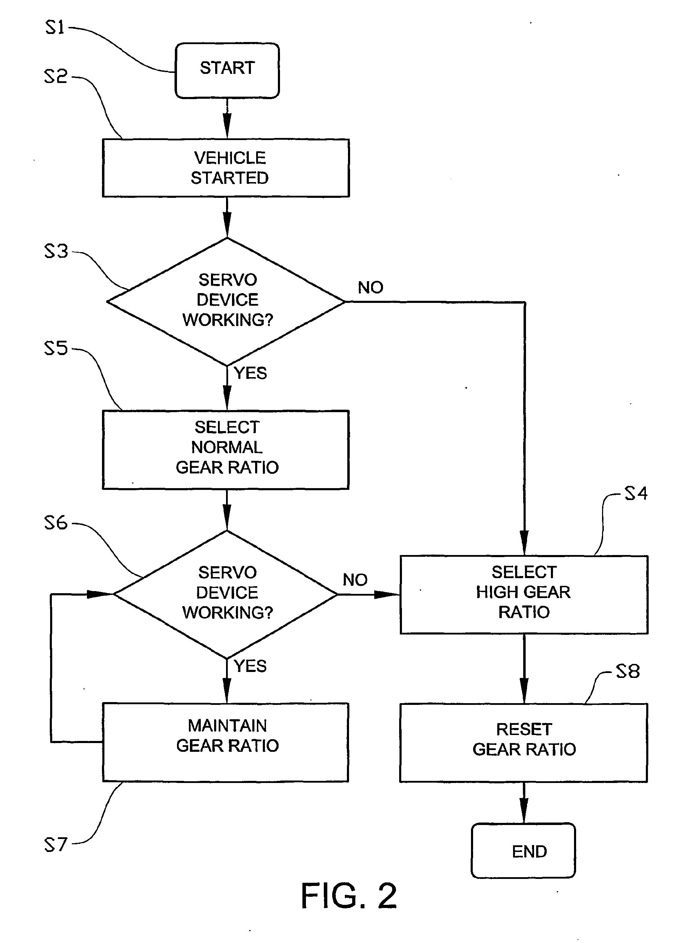

Figure 2 shows a schematic illustration of a flow chart that describes the vehicle steering gear ratio control method. The method starts S1 when the driver starts S2 the vehicle. The ECU detects S3 the function of the servo device. If the servo device is not working, the ECU selects S4 a high gear ratio by sending a signal to the variable transmission whereupon this is controlled so that a high gear ratio is obtained. By high gear ratio is meant here that the gear ratio is increased from a normal ratio by a factor in the range 1.2 to 3.5, preferably 1.25 to 2.25. If, however, the servo device is working, the ECU selects S5 a normal gear ratio in the said variable transmission. Thereafter, the ECU continually detects S6 the function of the servo device and maintains S7 the gear ratio as long as the servo device is working. If, for some reason, during operation, the servo device is no longer working, the ECU selects S4 a high gear ratio, as described above. Resetting of the gear ratio S8, after the servo device has not been working, is carried out after checks have been carried out in accordance with a predetermined routine. The method is thereby ended.

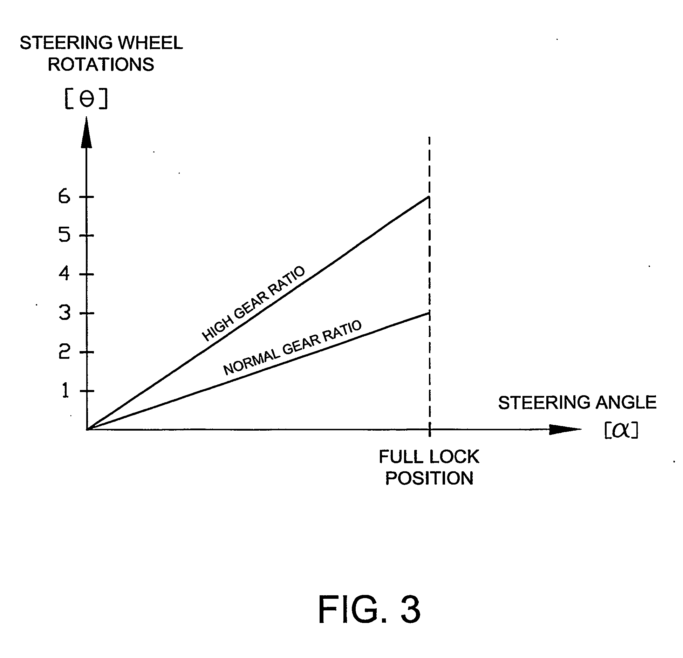

Figure 3 shows examples of how the gear ratio affects the number of rotations of the steering wheel that are required between full lock positions. The lower line corresponds to a desired normal gear ratio where three rotations of the steering wheel are required between full lock positions, while the upper line shows a high gear ratio, in this case increased by a factor of two, which thus means that six rotations of the steering wheel are required in order to achieve the said movement between full lock positions. When, as described above, the gear ratio is varied in steps, this corresponds to lines (not shown) between the lines illustrated and when the gear ratio is varied steplessly, this corresponds to the area between the lines, that is to say the gear ratio can assume all values between the lines.

Other embodiments are also possible: For example, a steering gear of the rack and pinion type can be used instead of the steering gear of the worm gear type described above. In addition, the variable transmission can be integrated in said steering gear.

## Claims

1. A vehicle steering gear ratio control method for a steering arrangement (1) comprising a steering element (2) connected to at least one wheel (9) of the vehicle, wherein a steering angle (α) of said wheel (9) of the vehicle being controlled in response to a movement (θ) of the steering element (2), wherein
said method includes the steps of:
- detecting a function of a servo device (13, 14, 15) connected to the steering arrangement (1);
- controlling a gear ratio between said movement (θ) of the steering element (2) and the steering angle (α) of the wheel (9) of the vehicle in response to the functioning of said servo device (13, 14, 15),
**characterized in that**
said gear ratio is increased from a normal ratio to a higher ratio when reduced functioning of the servo device (13, 14, 15) is detected, and
said gear ratio is increased from said normal ratio to said higher ratio by a factor in a range of 1.25 to 2.25, when it is detected that the functioning of the servo device (13, 14, 15) has been reduced.

2. A vehicle steering gear ratio control method for a steering arrangement (1) as claimed in claim 1, **characterized in that** said gear ratio is increased in steps, preferably in at least three steps, from said normal ratio to said higher ratio.

3. A vehicle steering gear ratio control method for a steering arrangement (1) as claimed in claim 1, **characterized in that** said control of the gear ratio is carried out steplessly, from said normal ratio to said higher ratio.

4. A vehicle steering gear ratio control method for a steering arrangement (1) as claimed in any one of claims 1 to 3, **characterized in that** said gear ratio is increased by a factor corresponding to a detected reduction in functioning of the servo device (13, 14, 15) with a force that is applied to the steering element (2) in order to achieve a required steering angle (α) being compensated so that said force is less than a predetermined maximum level at which it is possible to continue to drive the vehicle.

5. A vehicle steering gear ratio control method for a steering arrangement (1) as claimed in any one of the preceding claims, **characterized in that** said control of the gear ratio is carried out in a variable transmission (4).

6. A vehicle steering gear ratio control method for a steering arrangement (1) as claimed in any one of the preceding claims, **characterized in that** the function of the servo device (13, 14, 15) is detected by detectioning of an oil pressure from a hydraulic pump comprised in the servo device (13,14,15).

7. A vehicle steering gear ratio control method for a steering arrangement (1) as claimed in any one of the preceding claims, **characterized in that** said detection of functioning of the servo device (13, 14, 15) is carried out by detecting a speed of rotation of a shaft of an electric motor comprised in the servo device (13, 14, 15).

8. A vehicle steering gear ratio control method for a steering arrangement (1) as claimed in any one of the preceding claims, **characterized in that** said detection of functioning of the servo device (13, 14, 15) is carried out by detecting a power consumption of an electric motor shaft comprised in the servo device (13, 14, 15).

9. A vehicle steering gear ratio control method for a steering arrangement (1) as claimed in any one of the preceding claims, **characterized in that** the vehicle is a heavy vehicle, such as a bus or a lorry.

10. A vehicle steering gear ratio control method for a steering arrangement (1) as claimed in any one of the preceding claims, **characterized in that** the steering clement (2) is a steering wheel.

11. A computer program comprising program code for carrying out all the steps of a vehicle steering gear ratio control according to any one of claims 1-10 when said program is executed by a computer.

12. A computer program product comprising program code stored on a medium that can be read by a computer, for carrying out all the steps of a vehicle steering gear ratio control according to any one of claims 1-10 when said computer program is executed by a computer.

13. A computer program product that can be downloaded directly into an internal memory in a digital computer, comprising a computer program for carrying out all the steps of a vehicle steering gear ratio control according to any one of claims 1-10 when said computer program is executed by said computer.

## Patentansprüche

1. Fahrzeuglenkübersetzungsverhältnisregelverfahren für eine Lenkanordnung (1) mit einem Lenkelement (2), das mit wenigstens einem Rad (9) des Fahrzeugs verbunden ist, wobei ein Lenkwinkel (α) des Rades (9) des Fahrzeugs ansprechend auf eine Bewegung (θ) des Lenkelements (2) geregelt wird, wobei das Verfahren die Schritte umfasst:
- Erfassung einer Funktion einer Servovorrichtung (13, 14, 15), die mit der Lenkanordnung (1) verbunden ist,
- Regeln eines Übersetzungsverhältnisses zwischen der Bewegung (θ) des Lenkelementes (2) und dem Lenkwinkel (α) des Rades (9) des Fahrzeugs in Ansprechung auf die Tätigkeit der Servovorrichtung (13, 14, 15),
**dadurch gekennzeichnet, dass**
- das Übersetzungsverhältnis von einem normalen Verhältnis auf ein höheres Verhältnis erhöht wird, wenn eine verringerte Tätigkeit der Servovorrichtung (13, 14, 15) erfasst wird und
- das Übersetzungsverhältnis von dem normalen Verhältnis auf das höhere Verhältnis um einen Faktor in einem Bereich von 1,25 bis 2,25 erhöht wird, wenn erfasst wird, dass die Tätigkeit der Servovorrichtung (13, 14, 15) verringert ist.

2. Fahrzeuglenkübersetzungsverhältnisregelverfahren für eine Lenkanordnung (1) nach Anspruch 1, **dadurch gekennzeichnet, dass** das Übersetzungsverhältnis in Schritten, vorzugsweise in wenigstens drei Schritten, von dem normalen Verhältnis auf das höhere Verhältnis erhöht wird.

3. Fahrzeuglenkübersetzungsverhältnisregelverfahren für eine Lenkanordnung (1) nach Anspruch 1, **dadurch gekennzeichnet, dass** die Regelung des Übersetzungsverhältnisses von dem normalen Verhältnis auf das höhere Verhältnis stufenlos durchgeführt wird.

4. Fahrzeuglenkübersetzungsverhältnisregelverfahren für eine Lenkanordnung (1) nach einem der Ansprüche 1 bis 3, **dadurch gekennzeichnet, dass** das Übersetzungsverhältnis um einen Faktor erhöht wird, der einer erfassten Verringerung der Tätigkeit der Servovorrichtung (13, 14, 15) mit einer Kraft entspricht, die auf das Lenkelement (2) aufgebracht wird, um zu erreichen, dass ein erforderlicher Lenkwinkel (α) kompensiert wird, so dass die Kraft geringer ist als eine vorherbestimmte maximale Höhe, bei der es möglich ist, weiter mit dem Fahrzeug zu fahren.

5. Fahrzeuglenkübersetzungsverhältnisregelverfahren für eine Lenkanordnung (1) nach einem der vorhergehenden Ansprüche, **dadurch gekennzeichnet, dass** die Regelung des Übersetzungsverhältnisses in einem variablen Getriebe (4) durchgeführt wird.

6. Fahrzeuglenkübersetzungsverhältnisregelverfahren für eine Lenkanordnung (1) nach einem der vorhergehenden Ansprüche, **dadurch gekennzeichnet, dass** die Tätigkeit der Servovorrichtung (13, 14, 15) durch Erfassung eines Öldrucks von einer Hydraulikpumpe erfasst wird, die in der Servovorrichtung (13, 14, 15) enthalten ist.

7. Fahrzeuglenkübersetzungsverhältnisregelverfahren für eine Lenkanordnung (1) nach einem der vorhergehenden Ansprüche, **dadurch gekennzeichnet, dass** die Erfassung der Tätigkeit der Servovorrichtung (13, 14, 15) durch Erfassung einer Drehzahl einer Welle eines elektrischen Motors durchgeführt wird, der in der Servovorrichtung (13, 14, 15) enthalten ist.

8. Fahrzeuglenkübersetzungsverhältnisregelverfahren für eine Lenkanordnung (1) nach einem der vorhergehenden Ansprüche, **dadurch gekennzeichnet, dass** die Erfassung der Tätigkeit der Servovorrichtung (13, 14, 15) durch Erfassung eines Energieverbrauchs einer Elektromotorwelle durchgeführt wird, die in der Servovorrichtung (13, 14, 15) enthalten ist.

9. Fahrzeuglenkübersetzungsverhältnisregelverfahren für eine Lenkanordnung (1) nach einem der vorhergehenden Ansprüche, **dadurch gekennzeichnet, dass** das Fahrzeug ein Schwerlastfahrzeug ist, wie z. B. ein Bus oder ein Lastwagen.

10. Fahrzeuglenkübersetzungsverhältnisregelverfahren für eine Lenkanordnung (1) nach einem der vorhergehenden Ansprüche, **dadurch gekennzeichnet, dass** das Lenkelement (2) ein Lenkrad ist.

11. Computerprogramm mit einem Programmcode zur Durchführung aller der Schritte einer Fahrzeuglenkübersetzungsverhältnisregelung nach einem der Ansprüche 1 bis 10, wenn das Programm durch einen Computer durchgeführt wird.

12. Computerprogrammerzeugnis mit einem Programmcode, der auf einem Medium gespeichert ist, das von einem Computer gelesen werden kann, zur Durchführung aller der Schritte einer Fahrzeuglenkübersetzungsverhältnisregelung nach einem der Ansprüche 1 bis 10, wenn das Computerprogramm durch einen Computer durchgeführt wird.

13. Computerprogrammerzeugnis, das direkt in einen internen Speicher in einen Digitalrechner heruntergeladen werden kann, mit einem Computerprogramm zur Durchführung aller der Schritte einer Fahrzeuglenkübersetzungsverhältnisregelung nach einem der Ansprüche 1 bis 10, wenn das Computerprogramm durch den Computer durchgeführt wird.

## Revendications

1. Procédé de commande de rapport de démultiplication de braquage de véhicule pour un agencement de braquage (1), comprenant un élément de braquage (2) relié à au moins une roue (9) du véhicule, dans lequel au moins un angle de braquage (α) de ladite roue (9) du véhicule est commandé en réponse à un déplacement (θ) de l'élément de braquage (2), dans lequel
ledit procédé comprend les étapes consistant à :
- détecter une fonction d'un dispositif asservi (13, 14, 15) relié à l'agencement de braquage (1),
- commander un rapport de démultiplication entre ledit déplacement (θ) de l'élément de braquage (2) et l'angle de braquage (α) de la roue (9) du véhicule en réponse au fonctionnement dudit dispositif asservi (13, 14, 15),
**caractérisé en ce que**
ledit rapport de démultiplication est augmenté d'un rapport normal jusqu'à un rapport supérieur lorsqu'un fonctionnement réduit du dispositif asservi (13, 14, 15) est détecté, et
ledit rapport de démultiplication est augmenté dudit rapport normal jusqu'audit rapport supérieur par un facteur dans la plage de 1,25 à 2,25, lorsqu'une réduction du fonctionnement du dispositif asservi (13, 14, 15) a été détectée.

2. Procédé de commande de rapport de démultiplication de braquage de véhicule pour un agencement de braquage (1) selon la revendication 1, **caractérisé en ce que** ledit rapport de démultiplication est augmenté par étapes, de préférence en au moins trois étapes, depuis ledit rapport normal jusqu'audit rapport supérieur.

3. Procédé de commande de rapport de démultiplication de braquage de véhicule pour un agencement de braquage (1) selon la revendication 1, **caractérisé en ce que** ladite commande du rapport de démultiplication est effectuée en continu, depuis ledit rapport normal jusqu'audit rapport supérieur.

4. Procédé de commande de rapport de démultiplication de braquage de véhicule pour un agencement de braquage (1) selon l'une quelconque des revendications 1 à 3, **caractérisé en ce que** ledit rapport de démultiplication est augmenté d'un facteur correspondant à une réduction détectée du fonctionnement du dispositif asservi (13, 14, 15) avec une force qui est appliquée à l'élément de braquage (2) pour obtenir un angle de braquage nécessaire (α) compensé, de sorte que ladite force est inférieure à un niveau maximum prédéterminé auquel il est possible de continuer de conduire le véhicule.

5. Procédé de commande de rapport de démultiplication de braquage de véhicule pour un agencement de braquage (1) selon l'une quelconque des revendications précédentes, **caractérisé en ce que** ladite commande du rapport de démultiplication est effectuée dans une transmission variable (3).

6. Procédé de commande de rapport de démultiplication de braquage de véhicule pour un agencement de braquage (1) selon l'une quelconque des revendications précédentes, **caractérisé en ce que** le fonctionnement du dispositif asservi (13, 14, 15) est détecté en détectant une pression d'huile depuis une pompe hydraulique incluse dans le dispositif asservi (13, 14, 15).

7. Procédé de commande de rapport de démultiplication de braquage de véhicule pour un agencement de braquage (1) selon l'une quelconque des revendications précédentes, **caractérisé en ce que** ladite détection de fonctionnement du dispositif asservi (13, 14, 15) est effectuée en détectant une vitesse de rotation d'un arbre d'un moteur électrique inclus dans le dispositif asservi (13, 14, 15).

8. Procédé de commande de rapport de démultiplication de braquage de véhicule pour un agencement de braquage (1) selon l'une quelconque des revendications précédentes, **caractérisé en ce que** ladite détection de fonctionnement du dispositif asservi (13, 14, 15) est effectuée en détectant une consommation de puissance d'un arbre de moteur électrique inclus dans le dispositif asservi (13, 14, 15).

9. Procédé de commande de rapport de démultiplication de braquage de véhicule pour un agencement de braquage (1) selon l'une quelconque des revendications précédentes, **caractérisé en ce que** le véhicule est un véhicule lourd, comme un bus ou un camion.

10. Procédé de commande de rapport de démultiplication de braquage de véhicule pour un agencement de braquage (1) selon l'une quelconque des revendications précédentes, **caractérisé en ce que** l'élément de braquage (2) est un volant.

11. Programme informatique comprenant un code de programme pour effectuer toutes les étapes d'une commande de rapport de démultiplication de braquage de véhicule selon l'une quelconque des revendications 1 à 10 lorsque ledit programme est exécuté par un ordinateur.

12. Produit à programme informatique comprenant un code de programme mémorisé sur un support qui peut être lu par un ordinateur, pour effectuer toutes les étapes de commande de rapport de démultiplication de braquage de véhicule selon l'une quelconque des revendications 1 à 10 lorsque ledit programme informatique est exécuté par un ordinateur.

13. Produit à programme informatique qui peut être téléchargé directement dans une mémoire interne dans un ordinateur numérique, comprenant un programme informatique pour effectuer toutes les étapes de commande de rapport de démultiplication de braquage de véhicule selon l'une quelconque des revendications 1 à 10 lorsque ledit programme informatique est exécuté par ledit ordinateur.
